# EUROPEAN PATENT APPLICATION

(11) **EP 2 573 646 A2**
(43) Date of publication of application: **27.03.2013**
(21) Application number: 12250152.1
(22) Date of filing: 21.09.2012
(51) Int. Cl.: G06F 1/16

(54) **Wireless data input system**

(30) Priority: 26.09.2011 GB 201116571; 27.09.2011 GB 201118603
(71) Applicant: Bytec Group Limited, Salfords, Redhill RH1 5DZ (GB)
(72) Inventor: Mifsud, Bernard, Redhill RH 1 5DZ (GB); Galvin, John, Henlow, Bedfordshire SG 16 6PF (GB)
(74) Representative: Sayer, Robert David

(57) **Abstract**

A data input system comprises a wireless keyboard 1 and docking station 3 which can be connected to a computer system 5. When the keyboard 1 and docking station 3 are mechanically connected, the docking station 3 is configured automatically to generate a new pairing code or key that is different to a previously-generated one. This new code/key is then transmitted back to the keyboard 1 over a wireless control link and the keyboard and docking station 3 then set up a paired data channel over which data from the keyboard is transmitted wirelessly to the docking station, and so the computer system 5. When a new mechanical connection is made, e.g. using the same or a different keyboard, the process repeats so that a new pairing code or key is generated, thus avoiding interference with other keyboard(s) that were previously paired with the same docking station 3.

## Description

### Field of the Invention

This invention relates to a wireless data input system, particularly though not exclusively a keyboard data input system and an associated docking apparatus for use with a computer or other electronic device.

### Background of the Invention

It is well known that computer keyboards, unless they are regularly cleaned and disinfected, can represent a major source of cross infection in hospitals and other healthcare environments. For this reason, wireless computer keyboards have been developed allowing them to be removed and cleaned periodically. Examples of such keyboards are the "Medi-Key" keyboards available from Bytec Medical of Redhill, Surrey, United Kingdom. The Medi-Key keyboards have a washable silicone rubber outer casing coated to improve resistance to mechanical and chemical damage and incorporating silver ions to impart anti-microbial properties to the casing.

Wireless keyboards typically work by transmitting radiofrequency signals to a transceiver mounted in or on the computer. The transceiver may be built into the computer or may be a separate item which is, for example, plugged into a USB port on the computer. Before a wireless keyboard can be used with the computer, the keyboard and computer must first be paired. Pairing (or binding) involves an exchange of information between the keyboard and computer so that the computer and keyboard each recognise one another and the computer is able to act on instructions received from the keyboard.

In a hospital environment, there will typically be many computers and also many other items of electronic equipment in very close proximity and it is very important to ensure that there is no interference between them. Therefore, wireless peripherals must be uniquely identified and paired with the computer with which they are intended to work. In a hospital environment, this poses a logistical problem in that when the keyboards are collected for cleaning they must each be returned to the same computer to which they are paired.

In order to avoid the logistical problem of matching a keyboard with its original computer, it would be desirable for a system/method whereby a keyboard can be paired with another computer or electronic device associated with a computer without the user needing to follow a complex or extraordinary procedure.

### Summary of the Invention

According to a first aspect, the invention provides a system comprising: a data input device and a docking station for association with a computer system, the data input device and docking station being configured in response to being in proximity to one another to establish a paired data communications channel for transmitting data wirelessly from the data input device to the docking station, the paired data communications channel being established using a pairing key or code that is generated automatically when the data input device is in proximity of the docking station and which is different from a previously-generated pairing key or code.

In the preferred embodiments, the data input device is a keyboard but can be any human machine interfacing (HMI) device such as a mouse, touch screen or trackball.

According to a second aspect, there is provided a system comprising a data input device and a docking station for the data input device, the docking station being provided with means for communicating with a computer; wherein the data input device and docking station are configured such that each time the data input device is disconnected from the docking station and the same data input device or an input device identical thereto is reconnected to the docking station, a new pairing key is generated to enable the data input device and docking station to communicate and the previous pairing key is rendered unusable.

By "unusable" is meant that the previous pairing key is no longer recognised by the docking station.

According to a third aspect, there is provided a docking station for use with a computer system, the docking station comprising: means for detecting a data input device in proximity of the docking station; and means responsive to the detecting means detecting a data input device in proximity automatically to establish a paired, wireless data communications channel with the data input device by means of generating a pairing key or code which is different from a previously-generated key or code, and transmitting said key or code to the data input device.

According to a fourth aspect, there is provided a method comprising: detecting a data input device and docking station being in proximity to one another; in response to said detection, automatically generating a pairing code or key at one of the input device or docking station and transmitting it to the other, the key or code being different from a previously-generated key or code; and establishing a paired, wireless data connection between the input device and docking station using the pairing code or key for the subsequent transfer of data from the data input device to a computer system associated with the docking station.

According to a fifth aspect, there is provided a system comprising: a data input device; a docking station; and a receiver device for association with a computer system, the data input device and docking station being configured in response to being in proximity to one another automatically to cause wireless transmission of a control signal to the receiver device, and the receiver device being configured in response to receipt of the control signal to establish a paired data communications channel with the data input device for the subsequent receipt of data wirelessly therefrom, the paired data communications channel being established using a pairing key or code that is generated automatically by the receiver device upon receipt of the control signal and which is different from a previously-generated pairing code or key.

According to a sixth aspect, there is provided a method comprising: detecting a data input device and docking station being in proximity to one another; in response to said detection, automatically transmitting a control signal wirelessly from the docking station to a remote receiver device associated with a computer system; at the remote receiver device, generating automatically a pairing code or key that is different from a previously-generated pairing code or key and transmitting it wirelessly to the data input device; and establishing a paired, wireless data connection between the data input device and the remote receiver device, using the pairing code or key, for the subsequent transfer of data from the data input device to the computer system associated with the remote receiver device.

### Brief Description of the Drawings

The invention will now be described, by way of non-limiting example, with reference to the accompanying drawings, in which:
Figure 1 is a block diagram showing components of a keyboard system for wireless connection to a computer system using a docking station, according to one embodiment of the invention;
Figure 2 is a view from above of a keyboard and docking station as employed in the first embodiment shown in Figure 1;
Figure 3 is a view from the underside of the keyboard of Figure 2 with the docking station removed;
Figure 4 is a view from below of the keyboard of Figure 2 with a docking station attached, but disconnected from the computer;
Figure 5 is a flow diagram indicating in overview the steps performed during a binding or pairing operation between the keyboard and docking station of the first embodiment after mechanical connection between the two;
Figure 6 is a flow diagram indicating in more detail the operating steps performed by each of the keyboard and docking station of the first embodiment after mechanical connection between the two;
Figure 7 is a state diagram for the keyboard;
Figure 8 is a state diagram for the docking station;
Figure 9 is a block diagram showing components of a keyboard system for wireless connection to a computer system using a remote docking station and wireless bridge, according to a second embodiment of the invention; and
Figure 10 is a flow diagram indicating the operating steps performed by each of the keyboard, remote docking station and wireless bridge of the second embodiment after mechanical connection between the keyboard and remote docking station.

### Detailed Description of Preferred Embodiments

The embodiments described herein provide systems and methods for quickly and automatically pairing a keyboard with a computer system, and without the need for a complex manual procedure. This allows a computer to relinquish its current keyboard and pair with a different keyboard. In this way, logistical problems that could arise when computer keyboards are taken away for cleaning are avoided.

In a first embodiment, the pairing is invoked automatically when a keyboard is connected to a docking station associated with a computer. Each time a keyboard is connected to the docking station, a different pairing key (that is a pairing key different from at least the previously generated key and preferably a reasonable number of previously-generated keys) is generated at the docking station and transmitted wirelessly back to the keyboard so that both can establish a communications channel using the new pairing key. As will be appreciated, the pairing key is a shared secret that, when exchanged between two devices, allows them to establish a data channel with each other. The pairing key is typically an n-bit number used as a seed when establishing an encrypted/encoded channel between the two devices. The fact that a new pairing key is generated at the docking station ensures that a previously-paired keyboard will longer communicate with the computer via the docking station. Further, there is no need for manual user-action to achieve this, other than connecting the keyboard to the docking station.

The newly connected keyboard may be the same as, or different to, the previously paired keyboard.

Advantageously, only the last keyboard to be connected to the docking station is able to communicate with the computer. Keyboards which may previously have been connected to the docking station cannot communicate with the computer due to the automatic change in pairing key. Therefore, when keyboards for a group of computers are taken away for cleaning, it does not matter whether the keyboard is returned to the computer to which it was previously paired, because each time a keyboard is placed in the docking station for a particular computer, a new pairing key is generated and the previous one is rendered ineffective or unusable.

In a second embodiment, to be described subsequently, the remote docking station is wirelessly connected to a computer system; this is by means of a wireless bridge which is physically connected to the computer system. The second embodiment is provided to accommodate alternative computer and keyboard arrangements; the docking station can be situated same distance (typically 15 metres or less) from the associated computer to facilitate charging at the point of use, remote from the computer.

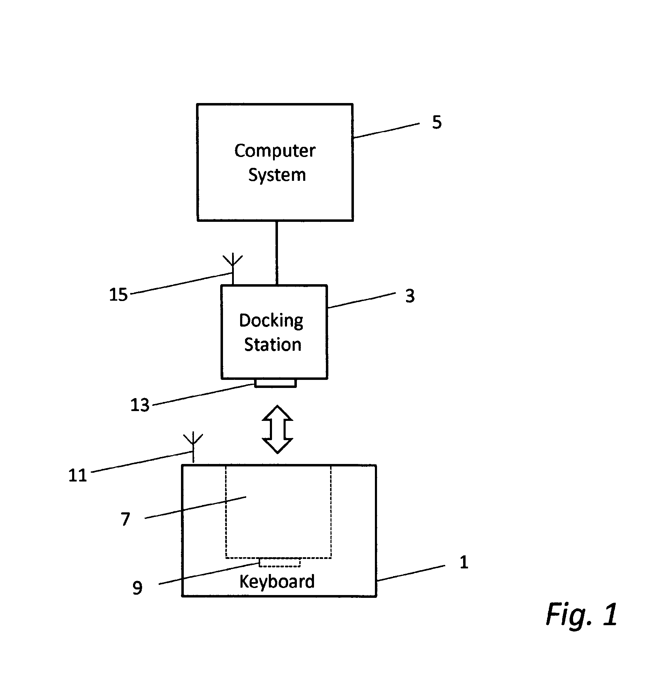

The first embodiment will now be described in detail with reference to Figures 1 to 8.

Referring to Figure 1, a data input system comprises a keyboard 1 and docking station 3 which is associated with a computer system 5, for example a personal computer or entertainment system in a hospital environment. The connection between the docking station 3 and computer system 5 is wired in this case, for example using a USB cable connection.

The keyboard 1 and docking station 3 are configured to be mechanically connected; when so connected, power received from the computer system 5 is transferred from the docking station 3 to the keyboard 1 as a charging source for the keyboard's internal battery. The mechanical connection between the keyboard 1 and docking station 3 is made by means of locating the docking station 3 within a correspondingly-shaped recess 7 in the underside of the keyboard 1 until respective electrical terminals 9, 13 of each device make mechanical/electrical contact.

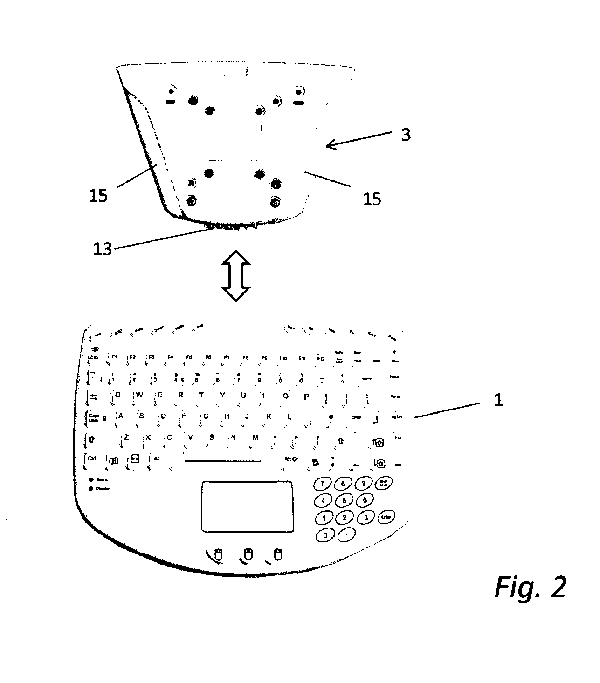

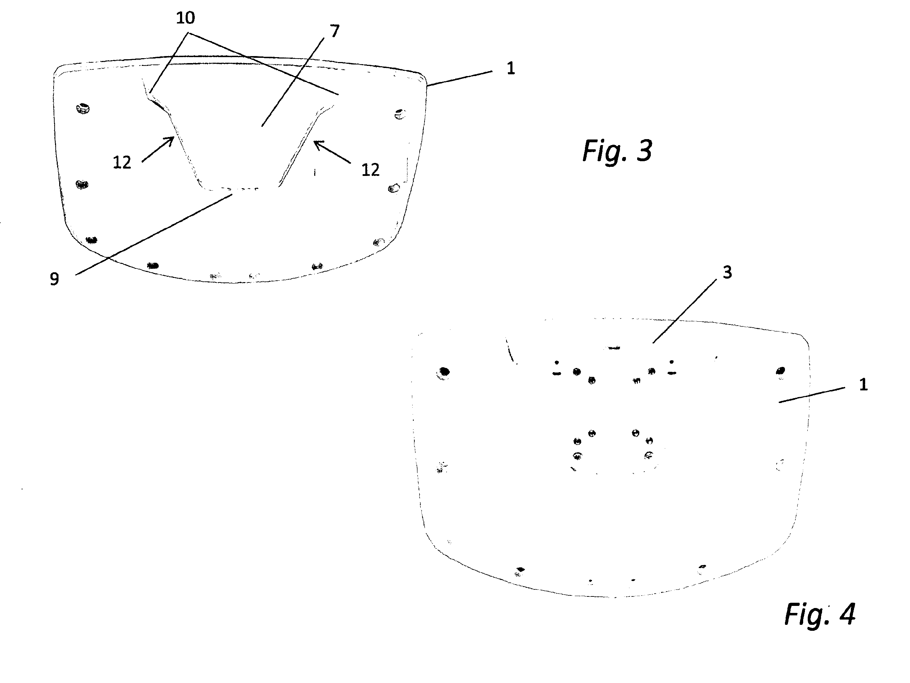

Each of the keyboard 1 and docking station 3 further comprises a wireless transceiver 11, 15 enabling wireless communications there between under the control of software running on respective microprocessors of the two units. Referring now to Figure 2, the keyboard 1 comprises a case which has a washable key mat or cover formed from a silicone material secured thereto so as to cover the upper surface of the keyboard. The silicone material is impregnated with silver ions in order to provide it with antibacterial activity. Referring to Figures 2 and 3, there is shown the recess 7 for accommodating the docking station 3. The recess 7 has converging side walls 10 with overhanging edges 12 beneath which are retaining grooves shaped to receive and engage the edges 15 of the docking station.

At the innermost end of the recess 7 is located an array of connector terminal (pads) 9 for connecting to connector terminals (pins) 13 on the docking station 3. Table 1 below shows the signal name and function of each of the six pins.

**Table 1**

| Pin Number | Signal | Description |
|---|---|---|
| 1 | VBUS | +5VDC power from PC via docking station |
| 2 | USB D- | USB D- signal |
| 3 | USB D+ | USB D+ signal |
| 4 | GND | 0VDC power from PC via docking station |
| 5 | PWRLAT | Power latch signal used to signal auto pairing |
| 6 | EN | VBUS power enable |

Figure 4 shows the keyboard 1 and docking station 3 when connected. The docking station 3 is provided with a USB port at the upper edge, which is used to provide the direct wired link to the computer system 5 or which may be connected to a USB charging device (not shown).

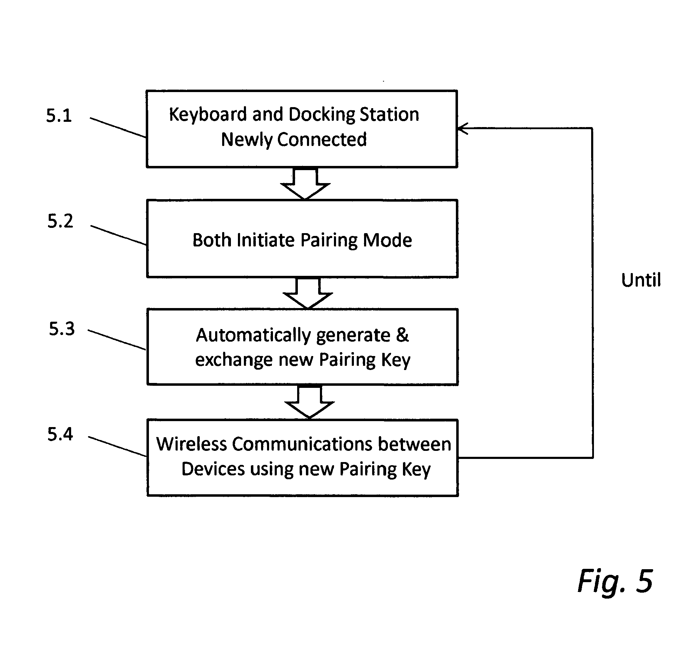

Referring to Figure 5, the main operating steps involved in auto pairing the keyboard 1 (or indeed any keyboard having the same or substantially similar physical form) to the docking station 3 will now be described.

In a first step 5.1, a new connection between the keyboard 1 and docking station 3 is detected. In response, in step 5.2, both devices 1, 3 automatically enter a pairing (or binding) mode in which a predetermined control channel is established between the devices for the exchange of a pairing key. In step 5.3, a new pairing key is automatically generated by the docking station 3 and is exchanged with the keyboard 1 over the wireless control channel. Note that this new pairing key is different from that previously used, and may be generated for example by incrementing the previous key.

Having exchanged keys in step 5.3, the keyboard 1 and docking station 3 conclude the pairing mode by establishing a new data channel using the new pairing key as a seed for the association/encoding. In step 5.4, wireless communications take place between the keyboard 1 and the docking station 3 over the newly encoded data channel. Inputs received by the keyboard can be passed to the computer system 5.

Step 5.4 continues regardless of whether the keyboard 1 remains connected or is disconnected from the docking station 3. When the same keyboard 1, or a different keyboard is re-connected to the docking station 3, the process repeats from step 5.1.

In this embodiment, automatic generation of the pairing key is performed by software running on a processor within the docking station 3.

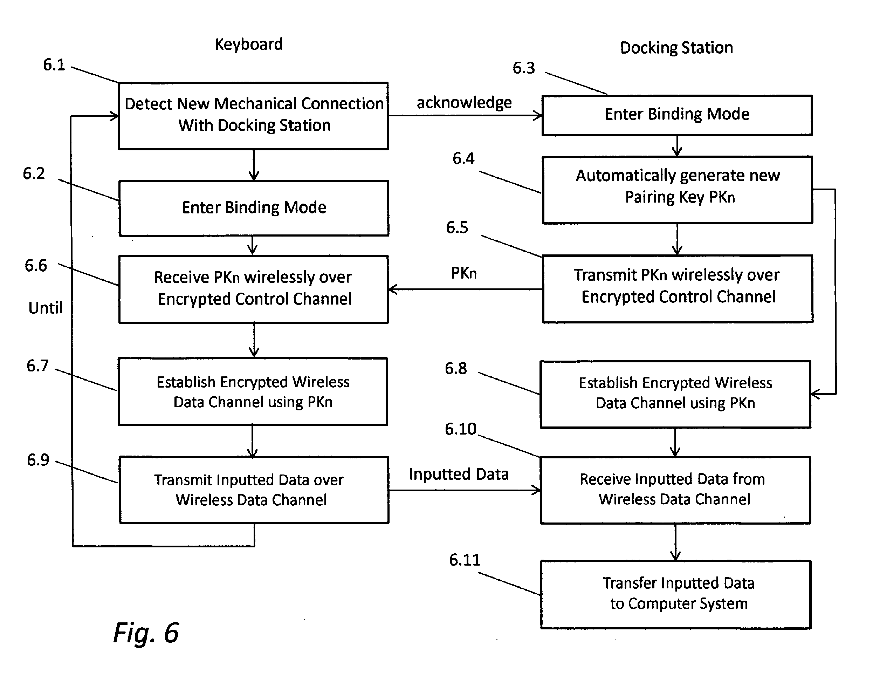

Referring to Figure 6, a more detailed description of the Figure 5 process will now be given.

In step 6.1, the keyboard 1 detects a new mechanical connection with the docking station 3 by means of its internal processor periodically interrogating an internal charging chip of the keyboard to identify when current is being received from the docking station 3. If it is, the keyboard 1 acknowledges this by toggling the PWRLAT signal on pin 5.

The keyboard 1 then enters the auto pairing mode in step 6.2, as does the docking station 3 in step 6.3. In this mode, both the keyboard 1 and docking station 3 are configured to communicate over a control channel established using a predetermined frequency and encryption key. To avoid interference with other nearby keyboards which might happen to have entered the pairing mode at the same time, the transceivers 11, 15 or at least that of the keyboard, reduce their transmission power during this pairing mode phase.

In step 6.4, the docking station 3 automatically generates a new pairing key PKn. PKn is a 64 bit number stored on non-volatile memory of the docking station. A new pairing key is generated under software control by incrementing the last 16 bits in response to entering the auto pairing mode in step 6.3. In step 6.5, PKn is transmitted wirelessly to the keyboard 1 over the control channel for reception in step 6.6. PKn is then stored on non-volatile memory of the keyboard 1 in place of any previous version.

In steps 6.7 and 6.8, respectively, the keyboard 1 and docking station 3 both reset out of their respective pairing modes to establish a new data communications channel and with PKn, as was generated in step 6.4, as the pairing key for encryption.

In step 6.9, data inputted through keys of the keyboard 1 will be transmitted over the new data communications channel for reception in step 6.10 and transfer to the computer system 5 in step 6.11.

It will be appreciated that steps 6.1 to 6.8 are performed automatically, without manual user intervention.

It will also be appreciated that the pairing key PKn will be recycled after 2¹⁶ iterations; so long as the new key is different from at least the previous key, and preferably a reasonable number of previous keys, there is little chance of interference from other keyboards.

At regular intervals, the keyboard 1 may be removed for cleaning. Typically, batches of computer keyboards will be removed at a time and taken for cleaning. After cleaning, because the keyboards are all substantially identical, it can be difficult to ensure that each keyboard is always returned to the computer from which it was originally taken. However, in this case, it does not matter whether the keyboard 1 is returned to its original computer/docking station 5, 3 because any new mechanical connection will result in the process returning to step 6.1.

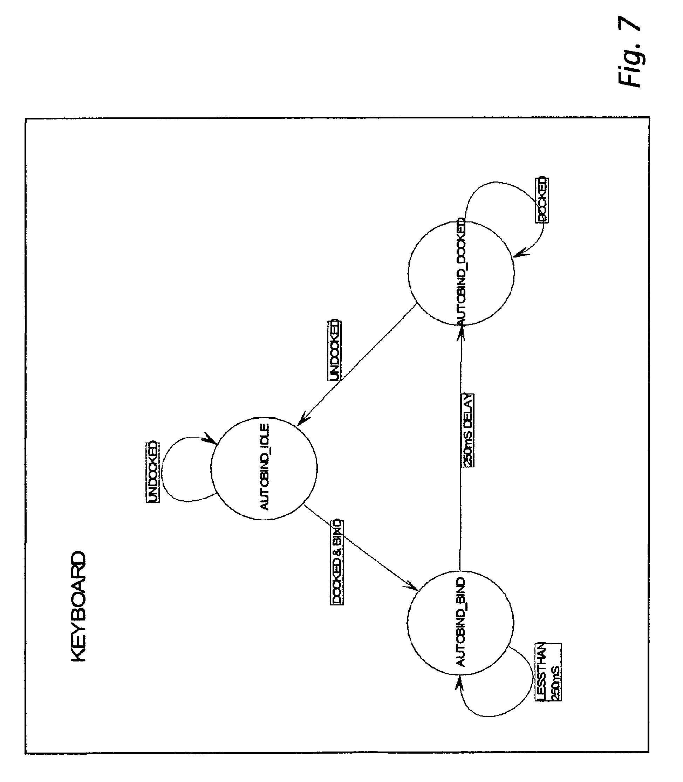

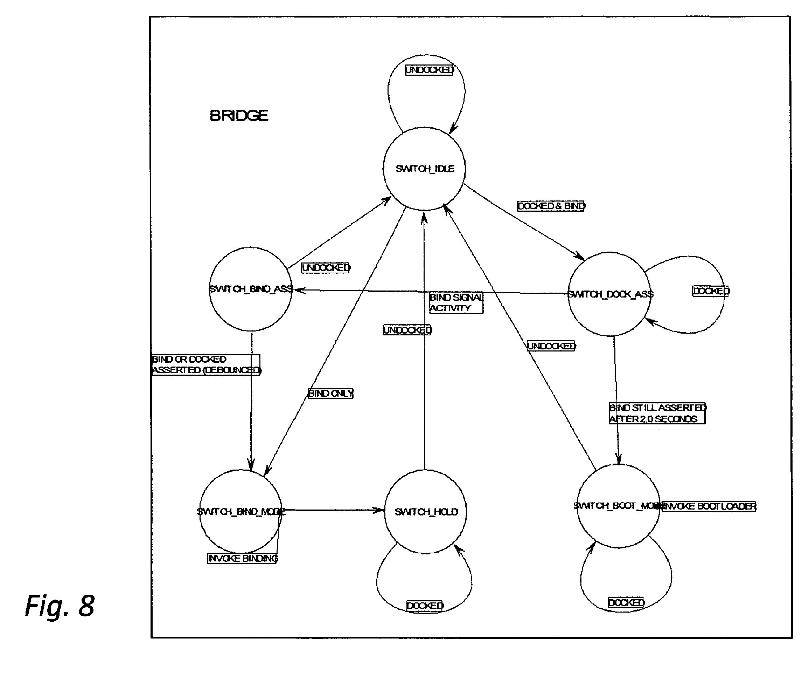

The sequences of steps involved in the auto pairing procedure are shown schematically in the state diagrams set out in Figures 7 and 8, which may be useful for understanding the invention.

Referring now to the keyboard state diagram as shown in Figure 7 and the contact signal table (table 1):
In the AUTOBIND_IDLE state, the keyboard is disconnected from the docking station and is waiting for the keyboard to be docked again. Once the keyboard has docked and charging is detected by interrogating the charging circuitry built into the keyboard, and PWRLAT goes high to identify the presence of the correct docking station, the keyboard state moves to AUTO BIND_BIND
AUTOBIND_BIND - Drive PWRLAT low for 250mS to ensure bridge detects it. Moves to AUTOBIND_DOCKED
AUTOBIND_DOCKED - Releases PWRLAT & invokes binding. Returns to IDLE when unplugged from docking station.

Figure 8 is the state diagram for the docking station 3. The sequence of state changes in the docking station can be summarised as follows:
SWITCH_IDLE - waits for EN & PWRLAT signal to be asserted. Moves to SWITCH_DOCK_ASS.
SWITCH_DOCK_ASS - Waits for PWRLAT activity or 2 second timeout to indicate boot-loader mode. If activity detected then move to SWITCH_BIND_ASS otherwise move to SWITCH_BOOT_MODE.
SWITCH_BIND_ASS - Keyboard detected and waits for signal to settle and ensures still docked. Moves to SWITCH_BIND_MODE.
SWITCH_BIND_MODE - Invoke bind mode. Moves to SWITCH_HOLD.
SWITCH_HOLD - Waits until the keyboard is unplugged from the docking station.
SWITCH_BOOT_MODE - Invoke boot-loader mode & await undocked (code abandoned in this state as boot-loader takes over).

Once the pairing procedure has been completed, the keyboard 1 is able to communicate with the computer system 5. It can be used when attached to the docking station 3 or it can be used when detached from the docking station. In both cases, the keyboard 1 communicates wirelessly with the docking station

A significant advantage of the present invention is that it enables keyboards to be removed, cleaned and replaced without the need for specialist IT support to reset pairings between keyboard and computer in the event that a different keyboard is reconnected to a computer.

### Auto pair for wirelessly connecting docking stations

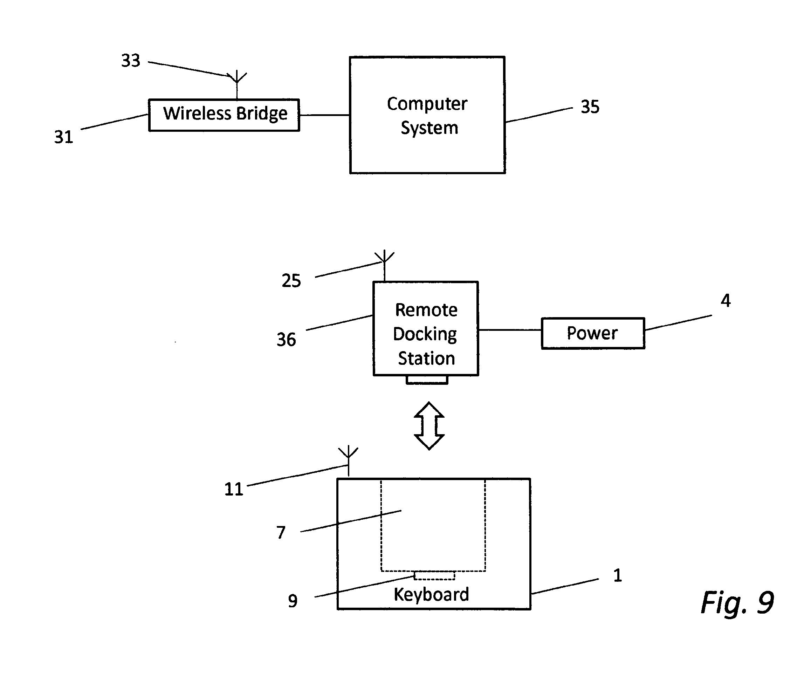

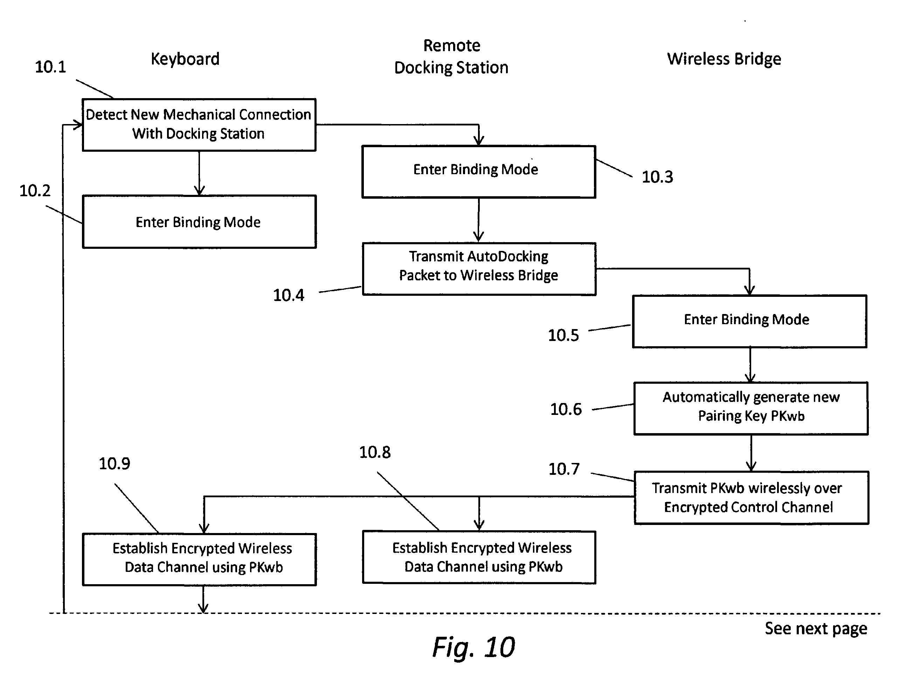

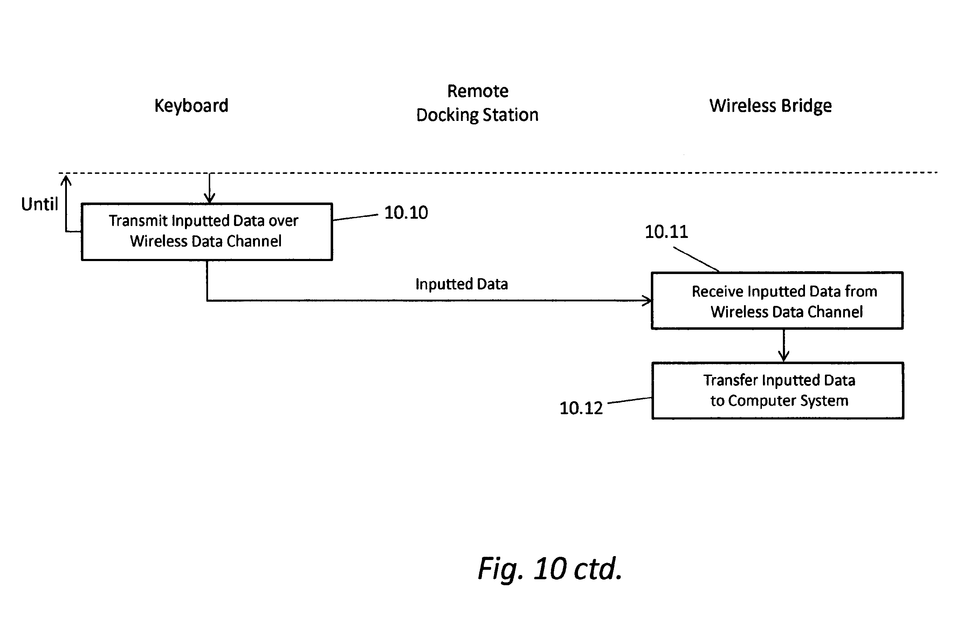

A second embodiment will now be described with reference to Figures 9 and 10. This embodiment is similar to that shown in Figure 1, save for the fact that the docking station, hereafter referred to as the remote docking station 36, is not physically connected to an associated computer system; rather the connection is wireless.

Referring to Figure 9, the keyboard 1 is configured to be connected to the remote docking station 36 located some distance (approximately 15 metres or less) from an associated computer system 35. A wireless bridge 31 is connected to the computer system 35 and includes a wireless transceiver 33 suitable for connecting with respective transceivers of the keyboard 1 and the remote docking station 36. In this configuration the wireless bridge 31 is connected to the computer system 35 via a USB port. The remote docking station 36 is powered from an external power supply 4, which can be achieved through a wired connection to a local wall socket, and communicates wirelessly with the wireless bridge 31 during auto pairing. The remote docking station 36 is also used for charging the keyboard 1 when the two are mechanically connected.

In brief, when the keyboard 1 is docked, that is mechanically connected to, the remote docking station 36, the latter initiates a remote pairing procedure by sending a remote pairing request packet to the wireless bridge 31. The wireless bridge 31 in turn acknowledges the remote pairing request and enters a pairing mode with a new key, different from that generated previously. The keyboard 1 and remote docking station 36 then pair with the wireless bridge 31. Both the keyboard 1 and the wireless docking station 36 are now paired with the wireless bridge 31 using the newly generated key. Any other keyboard previously paired with this wireless bridge 31 will no longer operate in this configuration.

A key advantage of this system is that the remote docking station 36 can be situated conveniently at the point of use, e.g. next to a patient's bed, to facilitate charging and does not have to be very close to, or wired to, the computer system 35.

Referring to Figure 10, a more detailed description of the steps involved in the auto pairing process will now be described. Steps 10.1 to 10.9 following mechanical connection occur automatically without human intervention.

In a first step 10.1, the keyboard 1 detects a new mechanical connection with the remote docking station 36. This results in both the keyboard 1 and remote docking station 36 entering the pairing mode (steps 10.2 and 10.3) and opening a control channel link at a predetermined frequency and using a predetermined encryption key. In step 10.4, the docking station 13 transmits an autodocking request packet to the wireless bridge 31 over a channel established using the current KPn. This causes the wireless bridge 31 itself to enter a pairing mode (step 10.5), to automatically generate a new pairing key PKwb (step 10.6) in the same way as described previously (i.e. by incrementing a 16 bit number) and to transmit the new pairing key PKwb over the control channel (step 10.7).

In steps 10.8 and 10.9, both the keyboard 1 and the docking station 36 reset from the pairing mode to establish respective communications links with the wireless bridge 31 using the same newly-generated pairing key PKwb. Subsequent inputs to the keyboard 1 (step 10.10) are thereafter transmitted directly to the wireless bridge 31 for reception (step 10.11) and transfer to the associated computer system 35 (step 10.12).

For completeness, the changes of state for the second embodiment are as follows for the wireless docking station 36.

SWITCH_IDLE - waits for EN & PWRLAT signal to be asserted. Moves to SWITCH_DOCK_ASS.

SWITCH_DOCK_ASS - Waits for PWRLAT activity or 2 second timeout to indicate boot-loader mode. If activity detected then move to SWITCH_BIND_ASS otherwise move to SWITCH_HOLD.

SWITCH_BIND_ASS - Keyboard detected and waits for signal to settle and ensures still docked. Moves to SWITCH_BIND_MODE.

SWITCH_BIND_MODE - Invoke pairing mode. Moves to SWITCH_HOLD.

SWITCH_HOLD-Waits until the keyboard is unplugged from the docking station.

Whilst the invention has been illustrated by reference to cleanable keyboards intended for use in hospitals and similar clean environments, it will be appreciated that the keyboard assemblies of the invention have general applicability and may be used in many other environments.

Whist in the embodiments described, a new pairing key is generated each time the keyboards are mechanically connected to a docking station, in alternative implementations other forms of proximity detection may be employed, e.g. using near field communication technology.

Although the method for generating new keys is herein described to involve incrementing a 16 bit number, alternative methods may involve using a random number generator or cycling through a finite sequence of keys.

It will readily be apparent that numerous modifications and alterations may be made to the specific embodiments of the invention described above without departing from the scope of the claims appended hereto. All such modifications and alterations are intended to be embraced by this application.

## Claims

1. A system comprising: a data input device and a docking station for association with a computer system, the data input device and docking station being configured in response to being in proximity to one another to establish a paired data communications channel for transmitting data wirelessly from the data input device to the docking station, the paired data communications channel being established using a pairing key or code that is generated automatically when the data input device is in proximity of the docking station and which is different from a previously-generated pairing key or code.

2. A system according to claim 1, wherein the docking station is configured to generate automatically the pairing code or key and transmit it back to the data input device.

3. A system according to claim 2, wherein the docking station comprises a wireless transmitter/receiver configured to transmit the pairing code or key back to a wireless transmitter/receiver of the data input device using a wireless control channel automatically set up using predefined parameters in response to the input device and docking station being in proximity.

4. A system according to claim 3, wherein the or each of the wireless transmitter/receivers are configured automatically to reduce its/their transmit power in response to the input device and docking station being in proximity.

5. A system according to any preceding claim, wherein the system is configured such that the pairing code or key is generated in response to the data input device and docking station being mechanically connected from a previously non-connected state.

6. A system according to claim 5, wherein the system is configured such that the pairing code or key is generated in response to the data input device and docking station being mechanically connected by respective electrical terminals.

7. A system according to claim 6, wherein the system is configured such that the pairing code or key is generated in response to the data input device exchanging electrical signal(s) with the docking station through the electrical terminals.

8. A system according to any one of claims 5 to 7, wherein the docking station is configured to provide a charging current to the keyboard when mechanically connected.

9. A system comprising a data input device and a docking station for the input device, the docking station being provided with means for communicating with a computer; wherein the input device and docking station are configured such that each time the input device is disconnected from the docking station and the same input device or an input device identical thereto is reconnected to the docking station, a new pairing key is generated to enable the input device and docking station to communicate and the previous pairing key is rendered unusable.

10. A method comprising:
detecting a data input device and docking station being in proximity to one another;
in response to said detection, automatically generating a pairing code or key at one of the input device or docking station and transmitting it to the other, the key or code being different from a previously-generated key or code; and
establishing a paired, wireless data connection between the input device and docking station using the pairing code or key for the subsequent transfer of data from the data input device to a computer system associated with the docking station.

11. A system comprising:
a data input device;
a docking station; and
a receiver device for association with a computer system,
the data input device and docking station being configured in response to being in proximity to one another automatically to cause wireless transmission of a control signal to the receiver device, and
the receiver device being configured in response to receipt of the control signal to establish a paired data communications channel with the data input device for the subsequent receipt of data wirelessly therefrom, the paired data communications channel being established using a pairing key or code that is generated automatically by the receiver device upon receipt of the control signal and which is different from a previously-generated pairing code or key.

12. A system according to claim 11, wherein the receiver device is further configured to established a paired data communications channel with the docking station for receipt of a subsequent control signal.

13. A system according to claim 11 or claim 12, wherein the docking station is configured to provide a charging current to the keyboard when mechanically connected.

14. A method comprising:
detecting a data input device and docking station being in proximity to one another;
in response to said detection, automatically transmitting a control signal wirelessly from the docking station to a remote receiver device associated with a computer system;
at the remote receiver device, generating automatically a pairing code or key that is different from a previously-generated pairing code or key and transmitting it wirelessly to the data input device; and
establishing a paired, wireless data connection between the data input device and the remote receiver device, using the pairing code or key, for the subsequent transfer of data from the data input device to the computer system associated with the remote receiver device.

15. A computer program comprising instructions that when executed by computer apparatus control it to perform the method of claim 14.
